# EUROPEAN PATENT SPECIFICATION

(11) **EP 4 012 288 B1**
(45) Date of publication and mention of the grant of the patent: **25.12.2024**
(21) Application number: 19941552.2
(22) Date of filing: 31.12.2019
(51) Int. Cl.: F24H 7/04, F24H 15/335, F24H 9/02, F28D 20/02, F24H 15/32, F24H 15/31, F24H 9/20, F24H 9/14, F28D 1/03, F28D 21/00

(54) **PHASE-CHANGE WATER HEATER**
PHASENWECHSEL-WASSERERHITZER
CHAUFFE-EAU À CHANGEMENT DE PHASE

(30) Priority: 09.08.2019 CN 201910734892
(43) Date of publication of application: 15.06.2022
(73) Proprietor: Wuhu Midea Kitchen and Bath Appliances Mfg. Co., Ltd., Wuhu, Anhui 241009 (CN); Midea Group Co., Ltd., Foshan, Guangdong 528311 (CN)
(72) Inventor: ZENG, Yun, Wuhu, Anhui 241009 (CN); WANG, Ming, Wuhu, Anhui 241009 (CN); QU, Shaohe, Wuhu, Anhui 241009 (CN)
(74) Representative: RGTH
(86) International application number: PCT/CN2019/130626
(87) International publication number: WO 2021/027239

(56) References cited:
- CN-A- 103 363 696
- CN-A- 110 081 595
- CN-A- 110 081 595
- CN-U- 202 709 469
- CN-U- 204 705 041
- CN-U- 204 705 041
- CN-U- 205 717 913
- CN-U- 206 469 331
- CN-U- 206 469 331
- CN-U- 207 778 784
- US-A1- 2017 219 294

## Description

### FIELD

The present invention relates to the field of water heaters, and more particularly, to a phase-change water heater.

### BACKGROUND

The water heater in the related art has a large inner container volume and a large water storage capacity, which can meet the water demand of many people at the same time. However, due to the large water storage capacity of the inner container, it takes a long time to heat the cold water to a predetermined temperature, which cannot meet a need of urgent water use. If the water temperature of the inner container needs to be kept relatively stable, the water in the inner container needs to be heated repeatedly, an energy consumption is high and electricity is wasted. Moreover, if the water in the inner container is heated repeatedly for a long time, it is prone to form lime scale.
CN 205 717 913 U discloses a phase-change thermal formula water heater, including: a box equipped with phase change material in it, a heat exchange line being located in the box, an inlet pipe, an outlet pipe, a heating device installed in the heat exchange line, and a circulation branch pipe, connecting the inlet pipe and the outlet pipe with the heat exchange line to form a circulation heat transfer return circuit jointly, the circulation heat transfer return circuit being equipped with the water pump, and a control valve on the circulation branch pipe.
CN 206 469 331 U discloses an improved panel mounting structure for an electric heater, including a back shell, glass panels is installed to the back shell front end, a frame for the glass panels that has cup joints, be connected with a plurality of connecting pieces, the connecting piece passing through fastener and back shell erection joint, to fix the glass panels on the back shell, the installation of glass panels and combination formula frame, can set clearance fit to, and the connecting piece also is clearance fit with combination formula frame, so can have certain free gap between glass panels and the combination formula frame, which can not cause any extrusion to glass panels when back shell and combination formula frame cold shrink, also there is certain space for the combination formula frame and back shell to expand.
CN 207 778 784 U discloses a water heater, including: a casing having a first heat accumulation chamber and a second heat accumulation chamber, a phase change material established to the first heat accumulation chamber, and a second phase change material established to the second heat accumulation chamber, a first heat exchanger located in the first heat accumulation chamber, the first heat exchanger having concatenated a circulation heating spare in order to form a circulation circuit, a second heat exchanger, located in the second heat accumulation chamber, the second heat exchanger has concatenated a second circulation heating spare in order forming a second circulation circuit, and concatenates a radiator in the casing outside on the second circulation circuit.
CN 204 705 041 U discloses an instant heating type phase change energy storage water heater, including an instant heating mechanism and a phase change energy storage unit, the instant heating mechanism installed in the phase change energy storage unit hot water delivery port department. The phase change energy storage unit includes a shell, having an insulation material layer, an inner shell, phase change material in the inner shell, and a heat exchange coil, an electrical heating mechanism, and a temperature sensor among the phase change material.

### SUMMARY

The present disclosure aims to solve at least one of the above technical problems to a certain extent.

To this end, an object of the present disclosure is to propose a phase-change water heater which has low energy consumption and can provide healthy water for users.

The phase-change water heater according to embodiments of the present disclosure has at least a water discharging mode and a circulation heating mode, and includes: a housing defining a chamber; an inner container disposed in the chamber and having a phase-change material filled therein; a heat exchanger buried in the phase-change material; and a water control system connected to a water inlet and a water outlet of the heat exchanger, and the circulation heating mode and the water discharging mode are switchable by the water control system.

The phase-change water heater according to the embodiments of the present disclosure uses a heat storage capacity of the phase-change material to realize rapid hot water production without repeated heating, which saves the energy consumption, and avoids problems of dirt and pollution caused by long-term heating of the inner container.

Further, the phase-change water heater according to the embodiments of the present disclosure can further have following additional technical features.

According to some embodiments of the present disclosure, a front surface of the housing is provided with a panel assembly provided on a front surface thereof, the panel assembly includes a connecting plate and a glass plate, and the glass plate is adhered on the connecting plate.

According the invention, the housing includes a front housing and a rear housing that are connected to each other, the chamber is defined by the front housing and the rear housing, a glass plate and a connecting plate are provided in front of the front housing, the glass plate is disposed on the connecting plate, and a gap structure is provided between the connecting plate and the front housing.

In an optional embodiment, the gap structure includes one or more convex hulls formed on the connecting plate and protruding backwards.

According to some embodiments of the present disclosure, a glass plate is provided on a front surface of the housing, and a reinforced structure is provided on the housing or the inner container, the reinforced structure being configured to resist expansion of the phase-change material towards the glass plate.

In an optional embodiment, the reinforced structure is disposed on an outer wall of the inner container and at least a portion of the reinforced structure is on the same side as the glass plate.

According to embodiments of the present disclosure, at least a side wall of the housing has a port, and the phase-change water heater further includes an end plate that is detachably disposed on each of the at least one side wall to close the port.

In an optional embodiment, the end plate is connected to each of the at least one side wall of the housing in a plug-in manner.

According to some embodiments of the present disclosure, the water control system includes: a water inlet pipe, an outlet of the water inlet pipe being respectively connected to the water inlet and the water outlet of the heat exchanger, wherein a one-way valve and a thermostatic valve are disposed in parallel between the water inlet pipe and the water outlet of the heat exchanger, and a heater is disposed between the water inlet pipe and the water inlet of the heat exchanger; a water outlet pipe connected to the thermostatic valve; and a water pump disposed between the water inlet of the heat exchanger and the water outlet of the heat exchanger, wherein in the circulation heating mode, the water inlet and the water outlet of the heat exchanger are communicated with each other through a pipeline where the one-way valve is located.

In an optional embodiment, the housing includes a partition plate, the partition plate divides the chamber into a first installation chamber and a second installation chamber that are independent from each other and are not open to each other, either the water control system or the inner container is disposed in the first installation chamber, and the other of the water control system and the inner container is disposed in the second installation chamber.

Additional aspects and advantages of embodiments of the present disclosure will be given in part in the following descriptions, become apparent in part from the following descriptions, or be learned from the practice of the embodiments of the present disclosure.

### BRIEF DESCRIPTION OF DRAWINGS

The above and additional aspects and advantages of embodiments of the present disclosure will become apparent and more readily appreciated from the following descriptions made with reference to the accompanying drawings, in which:
FIG. 1 is a perspective view of a phase-change water heater according to some embodiments of the present disclosure from an angle;
FIG. 2 is a cross-sectional view taken along line A-A of FIG. 1;
FIG. 3 is a perspective view of a phase-change water heater according to some embodiments of the present disclosure from another angle;
FIG. 4 is a cross-sectional view taken along line B-B of FIG. 3;
FIG. 5 is an exploded view of a phase-change water heater;
FIG. 6 is a perspective view of a phase-change water heater according to some embodiments of the present disclosure from yet another angle;
FIG. 7 is a cross-sectional view taken along line C-C of FIG. 6;
FIG. 8 is a schematic diagram illustrating connections of a water control system according to some embodiments of the present disclosure, in which arrows indicate water flow directions in a water discharging mode;
FIG. 9 is a schematic diagram illustrating connections of a water control system according to some embodiments of the present disclosure, wherein arrows indicate water flow directions in a circulation heating mode; and
FIG. 10 is a schematic diagram of a partial structure of a water control system according to some embodiments of the present disclosure.

Reference numerals:
phase-change water heater 100;
housing 10; chamber 11; panel assembly 12; glass plate 121; connecting plate 122; front housing 13; port 131; first connecting member 132; front main plate 133; front side plate 134; rear housing 14; second connecting member 141; rear main plate 142; rear side plate 143; gap structure 15; reinforced structure 16; end plate 17; partition plate 18;
inner container 20;
water control system 40; water inlet pipe 41; water outlet pipe 42; one-way valve 43; thermostatic valve 44; heater 45; water pump 46; heat exchanger 47; water inlet 471; water outlet 472.

### DESCRIPTION OF EMBODIMENTS

Embodiments of the present disclosure will be described in detail below, and examples of the embodiments are illustrated in the accompanying drawings, throughout which same or similar reference numerals refer to the same or similar elements or elements having the same or similar functions. The embodiments described below with reference to the accompanying drawings are illustrative and intended to explain the present disclosure and should not be construed as limiting the present disclosure.

After in-depth research and bold attempts, the inventor has broken through disadvantages of existing electric water heaters, which are bulky and single in appearance. After years of arduous efforts, a brand-new phase-change water heater 100 is designed. The phase-change water heater 100 makes full use of properties of a phase change material in storing heat at high temperature and releasing heat at low temperature, so as to meet needs of users who want to use water sooner.

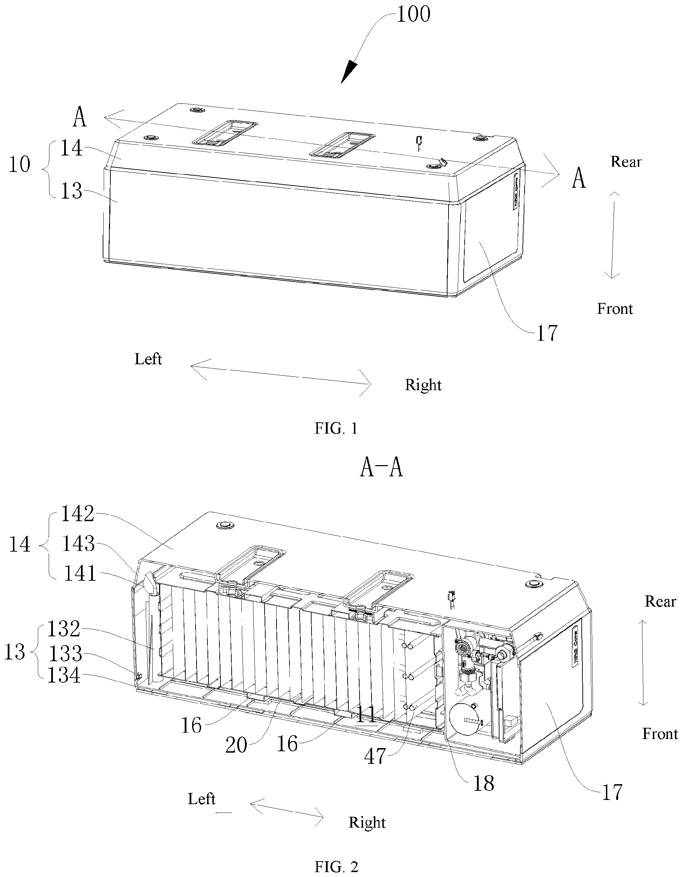

Referring now to FIGS. 1 to 10, a phase-change water heater 100 according to embodiments of the present disclosure is described. The phase-change water heater 100 includes a housing 10, an inner container 20, a heat exchanger 47, and a water control system 40. The phase-change water heater 100 at least has a water discharging mode and a circulation heating mode.

Specifically, as shown in FIGS. 1 to 2, the housing 10 defines a chamber 11, and the inner container 20 is disposed in the chamber 11. That is, the housing 10 provides an installation space, and the inner container 20 is installed in the chamber 11.

The inner container 20 has a phase-change material filled therein. The phase-change material has heat absorption and heat release functions. The heat exchanger 47 is buried in the phase-change material. When there is a temperature difference between the phase-change material and the water in the heat exchanger 47, the phase-change material exchanges heat with the heat exchanger 47. That is, in the case that the water in the heat exchanger 47 has a lower temperature than the phase-change material, the heat of the phase-change material is released to the water in the heat exchanger 47, and the water temperature in the heat exchanger 47 rapidly rises; in the case that the water in the heat exchanger 47 has a higher temperature than the phase-change material, the phase-change material will absorb the heat of the water in the heat exchanger 47, and thus the temperature of the phase-change material will rise constantly.

The water control system 40 is connected to a water inlet 471 and a water outlet 472 of the heat exchanger 47. The circulation heating mode and the water discharging mode are switchable by the water control system 40. In the water discharging mode, the heat exchanger 47 supplies hot water to the outside, and the water control system 40 supplements water to the water inlet 471 of the heat exchanger 47, and in this process, the heat of the phase-change material can be constantly transferred to the water in the heat exchanger 47, thereby realizing constant supply of hot water to the outside. In the circulation heating mode, the heat exchanger 47 does not supply hot water to the outside, and water flows circularly between the water control system 40 and the heat exchanger 47 after being heated in the water control system 40, and in this process, the phase-change material constantly absorbs heat of the water in the heat exchanger 47 until the temperature of the phase-change material reaches a preset temperature.

That is, a water discharge capacity (i.e., a maximum water discharge amount) of the phase-change water heater 100 is in positive correlation with the heat storage capacity of the phase-change material. The phase-change water heater 100 stores heat in the phase-change material in advance, and the phase-change material can release the heat quickly to water in the heat exchanger 47 when hot water is in need, so that the purpose of discharging the hot water sooner is achieved.

In addition, compared with the traditional water heater, since the water in the heat exchanger 47 is constantly updated and replaced in the water discharging process of the phase-change water heater 100, the problem of use of residual water does not exist, the problem of bacteria growing in the heat exchanger 47 is avoided, and healthy water can be provided for users.

Compared with the traditional water heater, the phase-change water heater 100 according to the embodiments of the present disclosure can realize sooner hot water discharge by using the heat storage capacity of the phase-change material without repeated heating, thereby saving energy consumption and avoiding the problems of dirt and pollution caused by long-term heating of the inner container 20.

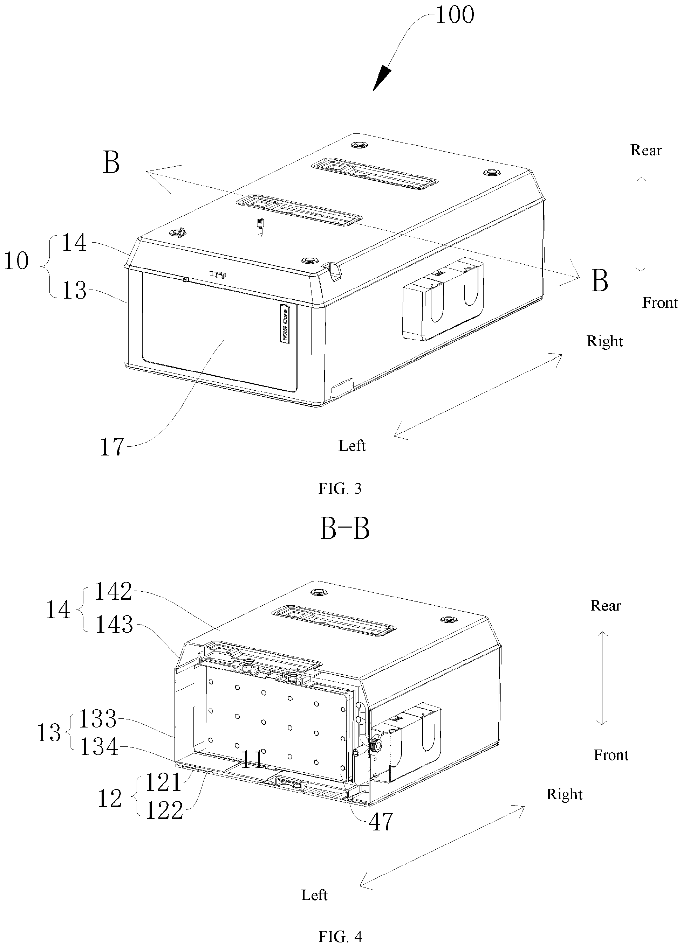

In some embodiments of the present disclosure, with reference to FIGS. 3 to 5, the housing 10 has a panel assembly 12 provided on a front surface thereof, that is, the panel assembly 12 is disposed in front of the housing 10 to cover a configuration of the surface of the housing 10, an internal structure of the phase-change water heater 100 cannot be observed through a decoration of the panel assembly 12, and therefore an entirety thereof is simple and elegant.

The panel assembly 12 is disposed in front of the housing 10, the panel assembly 12 includes a connecting plate 122 and a glass plate 121, and the glass plate 121 is adhered to the connecting plate 122. By providing the panel assembly 12 in the front of the housing 10, the panel assembly 12 may, on the one hand, reinforce a structural strength of a housing assembly and, on the other hand, may also shield the configuration of the surface of the housing 10. According to the phase-change water heater 100 of the embodiments of the present disclosure, the panel assembly 12 is disposed in front of the housing 10, so that problems that the housing assembly of the phase-change water heater 100 has a complex structure and an assembling process thereof is complicated are solved.

Furthermore, a volume of the phase-change material expands as the temperature increases, and shrink as the temperature decreases, so that a volume of the inner container 20 also changes accordingly. In particular, in the case that the glass plate 121 is provided on the housing 10, the glass plate 121 is easily broken due to crushing.

The inventor has noted the above problems in the design process, and has made an innovative improvement to the structure of the housing 10 of the phase-change water heater 100 in order to avoid the deformation of the inner container 20 pressing the glass plate 121.

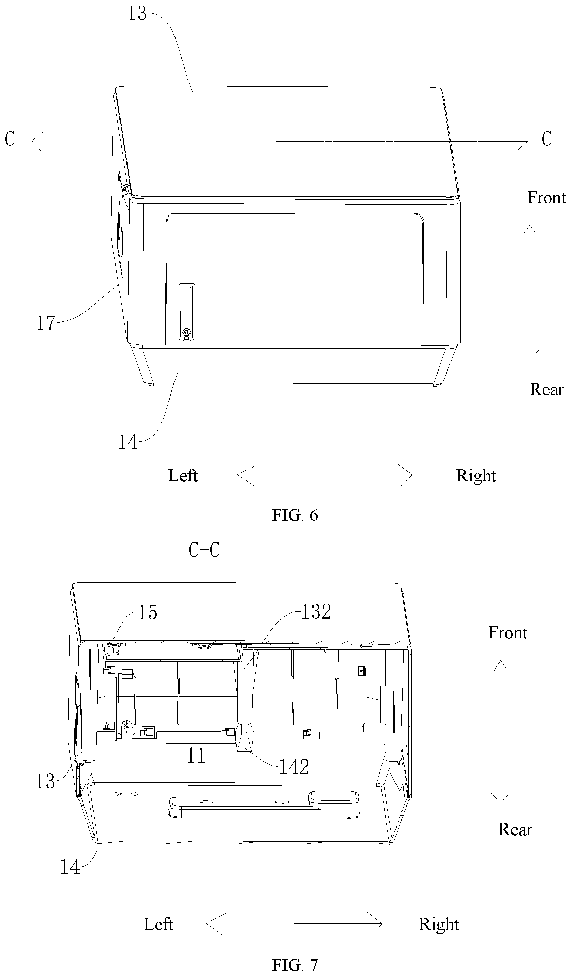

Specifically, as shown in FIGS. 6 and 7, the housing 10 includes a front housing 13 and a rear housing 14 that are connected to each other, a glass plate 121 and a connecting plate 122 are provided in front of the front housing 13, the glass plate 121 is disposed on the connecting plate 122, the connecting plate 122 is connected to the front housing 13, and a rear surface of the connecting plate 122 and a front surface of the front housing 13 have a gap structure 15 provided therebetween. The gap structure 15 may allow a partial gap to be present between the front housing 13 and the connecting plate 122, i.e., allow the front housing 13 and the connecting plate 122 to be partially separated.

In other words, the rear surface of the connecting plate 122 and the front surface of the front housing 13 are at least partially not in contact with each other, so that the force of the expansion of the inner container 20 acting on the front housing 13 is not completely transferred to the connecting plate 122, thereby reducing an influence of the expansion of the inner container 20 on the glass plate 121 to some extent and avoiding a deformation of the glass plate 121 due to the expansion force.

The forming position of the gap structure 15 is not particularly limited, and the gap structure 15 may be formed on the connecting plate 122, or the gap structure 15 may be formed on the front housing 13, or the gap structure 15 may be formed on both the connecting plate 122 and the front housing 13. Therefore, according to the housing 10 assembly of the embodiment of the present disclosure, the gap structure 15 provided between the rear surface of the connecting plate 122 and the front surface of the front housing 13 reduces the influence of the expansion force of the inner container 20 on the glass plate 121, ensures a flatness of the glass plate 121, and prevents deformation of the glass plate 121.

That is, the rear surface of the connecting plate 122 is separated from the front surface of the front housing 13 by a convex hull. The larger a protruding height of the convex hull with respect to the rear surface of the connecting plate 122, the larger the gap between the connecting plate 122 and the front housing 13.

Further optionally, the convex hull is formed by concaving from a front side of the connecting plate 122 to a rear side of the connecting plate 122. That is, the convex hull is formed by stretching from front to back, and the front surface of connecting plate 122 has a concave pit formed relative to a position where the convex hull is located. A screw hole can be formed on the convex hull, and under the condition that the front housing 13 and the connecting plate 122 are locked by a screw, the screw can be hidden in the concave pit, thereby avoiding the screw squeezing the glass plate 121.

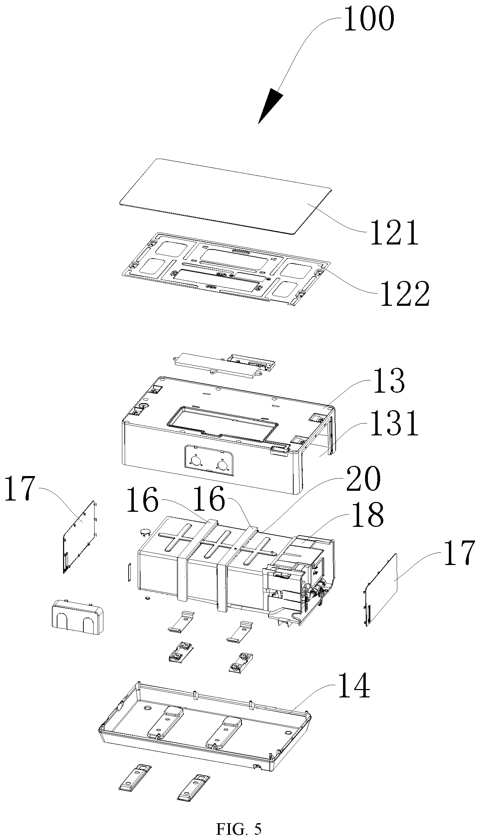

In some other embodiments of the present disclosure, as shown in FIG. 1 in conjunction with FIG. 2 and FIG. 5, the housing 10 has the glass plate 121 disposed on the front surface thereof, the inner container 20 is disposed in the housing 10, the inner container 20 has the phase-change material filled therein, the heat exchanger 47 is buried in the phase-change material, and the housing 10 or the inner container 20 has a reinforced structure 16 provided thereon, the reinforced structure 16 being configured to resist expansion of the phase-change material towards the glass plate 121.

The reinforced structure 16 is disposed on the housing 10 and/or the inner container 20, for example, the reinforced structure 16 may be connected onto the housing 10, the reinforced structure 16 may be connected onto the inner container 20, or the reinforced structure 16 may be connected respectively onto the housing 10 and the inner container 20.

It can be understood that, since the housing 10 has the glass plate 121 disposed on the front surface thereof according to the present disclosure, the glass plate 121 is brittle and is easily damaged. That is, the deformation of the phase-change material of the glass plate 121 has a greater influence on the glass plate 121.

In order to reduce the influence of the phase-change material on the glass plate 121, the reinforced structure 16 is provided for resisting the force of the phase-change material towards the glass plate 121, so that the pressure applied to the glass plate 121 is reduced, the influence of the phase-change material on the glass plate 121 can be reduced, and deformation of the glass plate 121 is prevented.

The reinforced structure 16 is disposed on an outer wall of the inner container 20 and at least a portion of the reinforced structure 16 is on the same side as the glass plate 121. At least a portion of the reinforced structure 16 is on the same side as the glass plate 121. In other words, at least a portion of the reinforced structure 16 is disposed on a side wall of the inner container 20 close to the glass plate 121. That is, a portion of the reinforced structure 16 may be on the same side as the glass plate 121, or the entire reinforced structure 16 may be on the same side as the glass plate 121. The reinforced structure 16 is disposed on the outer wall of the inner container 20, and plays a role of fastening the inner container 20, resisting the expansion force of the phase-change material towards the glass plate 121, and protecting the glass plate 121.

The above embodiments are merely illustrative and should not be construed as limiting the scope of the present disclosure. For example, the reinforced structure 16 may be disposed on an inner wall of the inner container 20, and the reinforced structure 16 may alternatively be disposed on the housing 10. In other words, the location of the reinforced structure 16 in the present disclosure is not exclusive as long as the reinforced structure 16 is capable of resisting the expansion force of the phase-change material towards the glass plate 121.

In some other embodiments of the present disclosure, specifically, as shown in FIGS. 1 to 3 and FIG. 5, the housing 10 defines a chamber 11, and at least one sidewall of the housing 10 each has a port. The port is in communication with the chamber 11, and devices such as an instant heating assembly, an energy storage tank, an electric control board, and a water pump 46 are provided in the chamber 11. Maintenance personal can overhaul the above-mentioned devices through the port. An end plate 17 may be formed on one side wall (left side wall or right side wall) of the housing 10, or, end plates 17 are formed on both of the two side walls (left side wall and right side wall) of the housing 10.

The end plate 17 is detachably disposed on the side wall and is configured to close the port. That is, the end plate 17 detachably fits with the housing 10, so that the end plate 17 can be detached from the housing 10 when in need of maintenance. Under normal use conditions, the end plate 17 can be mounted on the housing 10 to close the chamber 11, so as to ensure a tightness of the chamber 11.

Therefore, according to the phase-change water heater 100 of the embodiment of the present disclosure, at least one side wall of the housing 10 each has a port disposed thereon, and the port is detachably closed by the end plate 17, so that the maintenance of the devices in the chamber 11 is facilitated, and the tightness of the housing 10 can be ensured.

In an optional embodiment, the end plate 17 is connected to the side wall of the housing 10 in a plug-in manner. That is, one of the end plate 17 and the housing 10 has a buckle, the other one of the end plate 17 and the housing 10 has a snapping groove, and the end plate 17 and the housing 10 are connected through the cooperation of the buckle and the snapping groove. The end plate 17 coordinates with the housing 10 in the plug-in manner, which is convenient to assembling and disassembling, the processing process is simple, and the realization is easy.

Since the end plate 17 is smaller and lighter in mass relative to the housing 10, the end plate 17 can be more easily plugged into the housing 10 by providing the buckle on the end plate 17.

In some other embodiments of the present disclosure, the housing 10 includes: a panel assembly 12, a front housing 13, and a rear housing 14 opened forward.

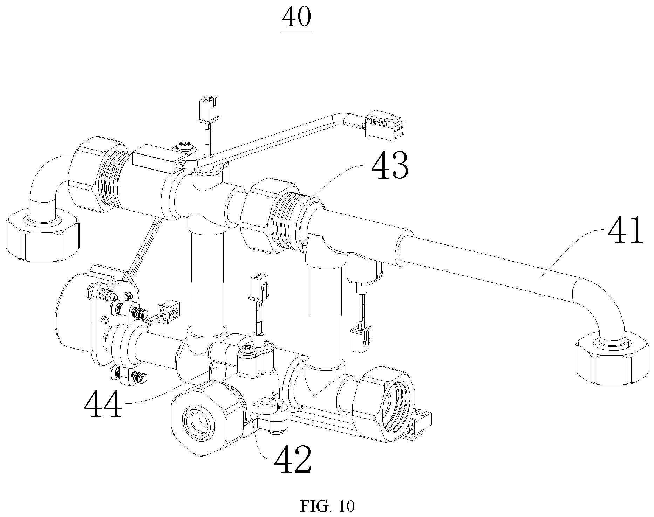

As shown in FIGS. 2 and 6, the panel assembly 12, the front housing 13 and the rear housing 14 are sequentially connected, the front housing 13 is opened backwards, the rear housing 14 is opened forward, the chamber 11 is defined by the front housing 13 and the rear housing 14, the front housing 13 has a first connecting member 132 disposed therein, the rear housing 14 has a second connecting member 141 disposed therein, the second connecting member 141 coordinating with the first connecting member 132, and as shown in FIG. 10, the panel assembly 12 is disposed on the front surface of the front housing 13.

In other words, the first connecting member 132 is disposed in the chamber formed by the front housing 13, the second connecting member 141 is disposed in the chamber formed by the rear housing 14, and the front housing 13 and the rear housing 14 are connected by the first connecting member 132 and the second connecting member 141. That is, the first connecting member 132 and the second connecting member 141 are both disposed in the chamber 11 and are not exposed outside the housing 10, so as to improve an overall simplicity of the appearance of the housing 10.

In some embodiments, as shown in FIG. 5, the front housing 13 includes a front main plate 133, and a front side plate 134 formed on a periphery of the front main plate 133 and extending backwards. The first connecting member 132 is a tubular column, and the first connecting member 132 is formed on the front side plate 134 and extends in a front-rear direction. As shown in FIG. 6, the rear housing 14 include: a rear main plate 142 and a rear side plate 143 formed at a periphery of the rear main plate 142 and extending forward. The second connecting member 141 is a tubular column, and the second connecting member 141 is formed on the rear side plate 143 and extends in the front-rear direction.

The front side plate 134 and the rear side plate 143 may be connected to each other in a butt joint manner, at least a part of the front side plate 134 may wrap an outer peripheral surface of the rear side plate 143, or at least a part of the rear side plate 143 may wrap the outer peripheral surface of the front side plate 134. The first connecting member 132 is connected to the front main plate 133 and extends in the front-rear direction, the second connecting member 141 is connected to the rear housing 14 and extends in the front-rear direction, and the first connecting member 132 is adapted to be mating-connected to the second connecting member 141. In other words, the front main plate 133 and the rear housing 14 are connected by the first connecting member 132 and the second connecting member 141, and both the first connecting member 132 and the second connecting member 141 are configured as tubular columns. In this way, structural strength of the first connecting member 132 and the second connecting member 141 can be improved, that is, connection strength between the front main plate 133 and the rear housing 14 can be improved.

In some optional embodiments, as shown in FIG. 5, the first connecting member 132 has a first screw hole disposed thereon, the second connecting member 141 has a second screw hole disposed thereon, and the first connecting member 132 and the second connecting member 141 are interlocked by a screw. Specifically, the first screw hole extends in an axial direction of the first connecting member 132 and penetrates through the first connecting member 132 and the front main plate 133, and the second screw hole extends in an axial direction of the second connecting member 141 and penetrates through the front main plate 133, the first connecting member 132, and the second connecting member 141 so as to connect the first connecting member 132 and the second connecting member 141. Since the panel assembly 12 is disposed on the front surface of front housing 13, an occurrence of corrosion failure of the screw due to exposure to the air can be effectively avoided, a service life of the screw can therefore be improved, a connection stability of the housing assembly can be guaranteed, and the maintenance can also be facilitated.

In some other embodiments of the present disclosure, the phase-change water heater 100 at least includes a water discharging mode and a circulation heating mode. In the water discharging mode, cold water in a water inlet pipe 41 and hot water flowing out of the heat exchanger 47 flow together into a thermostatic valve 44 to be mixed, and the cold water in the water inlet pipe 41 is also synchronously delivered into the heat exchanger 47 to supplement the water amount. A heater 45 may or may not preheat the cold water before the cold water enters the heat exchanger 47. In the circulation heating mode, the water inlet pipe 41 and the water outlet pipe 42 are both closed, water flows circularly between the heat exchanger 47 and the heater 45 under the pumping pressure of the water pump 46, and before the cold water enters the heat exchanger 47, the heater 45 must preheat the cold water to ensure that the phase-change material can store heat sufficiently. A heating pipe can be an instant heat pipe, and a power of the instant heat pipe can be adjustable, so that the instant heat pipe can adopt different heating powers for heating in different operation modes.

However, on the premise that a space structure of the phase-change water heater 100 is limited, it is uneasy to facilitate the installation of the pipeline and the structure of the water control system 40 while ensuring excellent performance in the product development process, the present disclosure aims to solve the problems on complex pipeline, difficult assembling operation and performance stability of the water control system 40 of the phase-change water heater 100.

Referring now to FIGS. 7 to 9, the water control system 40 of the phase-change water heater 100 according to embodiments of the present disclosure includes: a heat exchanger 47, a water inlet pipe 41, and a water outlet pipe 42.

Specifically, the heat exchanger 47 includes a water inlet 471 and a water outlet 472. The heat exchanger 47 is buried in the phase-change material of the phase-change water heater 100, and when there is a temperature difference between the phase-change material and the water in the heat exchanger 47, the phase-change material exchanges heat with the heat exchanger 47. That is, in the case that the water in the heat exchanger 47 has a lower temperature than the phase-change material, the heat of the phase-change material is released to the water in the heat exchanger 47; in the case that the water in the heat exchanger 47 has a higher temperature than the phase-change material, the phase-change material absorbs heat from the water in the heat exchanger 47.

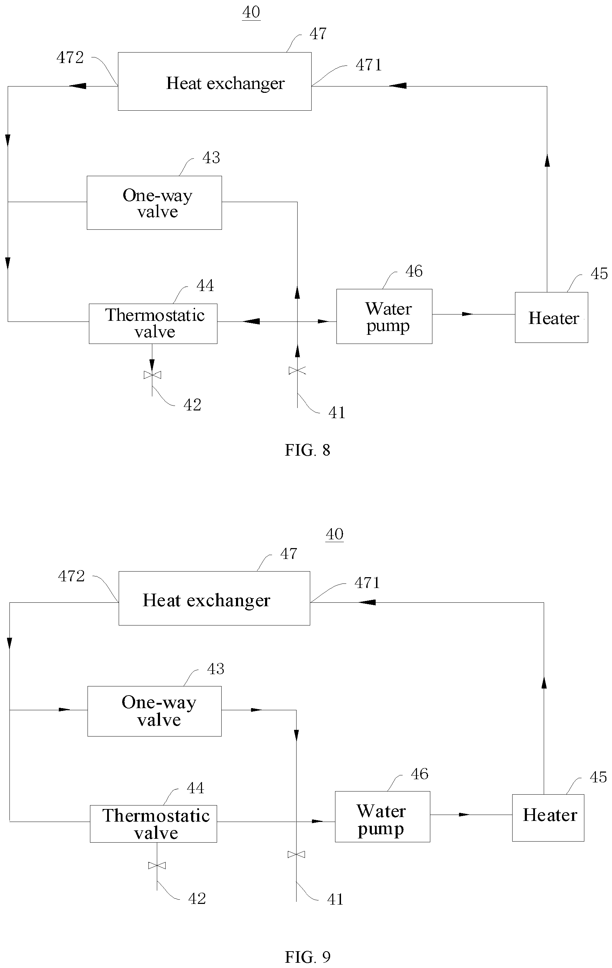

As shown in FIG. 7 and FIG. 8, an outlet of the water inlet pipe 41 is connected respectively to the water inlet 471 and the water outlet 472 of the heat exchanger 47. It should be noted that, in the present disclosure, "connected" should be understood in a broad sense, and may represent a direct connection or an indirect connection. Here, since a one-way valve 43 and a thermostatic valve 44 are disposed in parallel between the water inlet pipe 41 and the water outlet 472 of the heat exchanger 47, the water inlet pipe 41 is connected indirectly to the water outlet 472 of the heat exchanger 47. Further, since a heater 45 is disposed between the water inlet pipe 41 and the water inlet 471 of the heat exchanger 47, the water inlet pipe 41 is also connected indirectly to the water inlet 471 of the heat exchanger 47.

In the water control system 40, when the phase-change water heater 100 is in the water discharging mode, water in the water inlet pipe 41 can be simultaneously delivered to the thermostatic valve 44 and the heat exchanger 47, thereby realizing discharge of water from the water outlet pipe 42, feeding of water into the water inlet pipe 41, and a continuous water discharge from the phase-change water heater 100.

A water pump 46 is disposed between the water inlet 471 of the heat exchanger 47 and the water outlet 472 of the heat exchanger 47. In the circulation heating mode, the water pump 46 drives a water flow to flow between the inside and outside of the heat exchanger 47. It will be appreciated that in the water discharging mode, the water pump 46 may not be activated, and the water pump 46 may only act as a water flow channel. Thus, the energy consumption of the phase-change water heater 100 can be reduced, and the service life of the water pump 46 can be extended.

As shown in FIG. 9, in the circulation heating mode, the water inlet 471 and the water outlet 472 of the heat exchanger 47 are communicated with each other through a pipeline where the one-way valve 43 is located. In other words, in the water discharging mode, the one-way valve 43 is subjected to hydraulic pressure to disconnect the water inlet 471 of the heat exchanger 47 from the water outlet 472 of the heat exchanger 47, so that cold water is prevented from reversely entering the heat exchanger 47 from a path where the one-way valve 43 is located, and normal flow of the water control system 40 is ensured.

In short, according to the water control system 40 of the phase-change water heater 100 in the embodiments of the present disclosure, the outlet of the water inlet pipe 41 is respectively connected to the water inlet 471 and the water outlet 472 of the heat exchanger 47, and the one-way valve 43 and the thermostatic valve 44 are disposed in parallel between the water inlet pipe 41 and the water outlet 472 of the heat exchanger 47, which not only simplifies a pipeline layout of the water control system 40, but also facilitates a switching between the circulation heating mode and the water discharging mode of the water control system 40.

In an optional embodiment, the water pump 46 is disposed between the water inlet 471 of the heat exchanger 47 and the outlet of the water inlet pipe 41. That is, the water pump 46 is disposed close the water inlet pipe 41, so that the water pump 46 can be fully filled with cold water when the phase-change water heater 100 is not in an operating state (neither in the circulation heating mode nor in the water discharging mode), and thus, the water pump 46 can be prevented from being soaked in hot water for a long time, thereby extending the service life of the water pump 46.

In some other embodiments of the present disclosure, a heat insulation layer is disposed between the outer wall of the inner container 20 and the inner wall of the housing 10. The heat insulation layer can prevent the heat of the inner tank 20 from radiating to the outside, improve a heat insulation performance of the phase-change water heater 100, and reduce energy consumption. The heat insulation layer can be made of a foam material.

In an optional embodiment, the phase-change water heater further includes a partition plate 18, the partition plate 18 divides the chamber 11 into a first installation chamber and a second installation chamber that are independent from each other and are closed to each other, one of the water control system 40 and the inner container 20 is disposed in the first installation chamber, and the other one of the water control system 40 and the inner container 20 is disposed in the second installation chamber. Therefore, the thermal insulation material can be prevented from entering the water control system 40 and the safety of the circuit is ensured.

In the present disclosure, unless expressly stated or limited otherwise, the recitation of a first feature "on" or "under" a second feature may include a case of the first and second features being in direct contact, and may also include a case that the first and second features are not in direct contact, but are in contact via another feature between them. Also, the first feature "on", "above", or "over" the second feature may include the first feature being right above and obliquely above the second feature, or simply indicate that the first feature is at a higher level than the second feature. The first feature being "under", "beneath", or "below" the second feature includes the first feature being right under and obliquely under the second feature, or simply mean that the first feature is at a lower level than the second feature.

In the description of the specification, reference to the description of "one embodiment", "some embodiments", "an example", "a specific example", "some examples" or the like means that a particular feature, structure, material, or characteristic described in connection with the embodiment or example is included in at least one embodiment or example of the present disclosure. In this specification, the schematic representations of the above terms do not necessarily refer to the same embodiment or example. Furthermore, the particular features, structures, materials, or characteristics described may be combined in any suitable manner in any one or more embodiments or examples.

Although embodiments of the present disclosure have been shown and described above, it will be understood that the above embodiments are exemplary and should not be construed as limiting the present disclosure, and those skilled in the art may make variations, modifications, substitutions and alterations to the above embodiments within the scope of the present invention as defined in the claims.

## Claims

1. A phase-change water heater (100), having at least a water discharging mode and a circulation heating mode, the phase-change water heater (100) comprising:
a housing (10) defining a chamber (11);
an inner container (20) disposed in the chamber (11), and having a phase-change material filled therein;
a heat exchanger (47) buried in the phase-change material; and
a water control system (40) connected to a water inlet (471) and a water outlet (472) of the heat exchanger (47), wherein the circulation heating mode and the water discharging mode are switchable by the water control system (40),
wherein in the water discharging mode, the heat exchanger (47) supplies hot water to the outside, and the water control system (40) supplements water to the water inlet (471) of the heat exchanger (47), and wherein the circulation heating mode, the heat exchanger (47) does not supply hot water to the outside, and water flows circularly between the water control system (40) and the heat exchanger (47) after being heated in the water control system (40)¹
¹ description paragraph [0040]
wherein the housing (10) comprises a front housing (13) and a rear housing (14) that are connected to each other, the chamber (11) is defined by the front housing (13) and the rear housing (14),
**characterized in that** a glass plate (121) and a connecting plate (122) are provided in front of the front housing (13), the glass plate (121) is disposed on the connecting plate (122), and a gap structure (15) is provided between the
connecting plate (122) and the front housing (13)².
² current claim 3

2. The phase-change water heater (100) according to claim 1, wherein a front surface of the housing (10) is provided with a panel assembly (12) , wherein the panel assembly (12) comprises the connecting plate (122) and the glass plate (121), and the glass plate (121) is adhered on the connecting plate (122).

3. The phase-change water heater (100) according to claim 1, wherein the gap structure (15) comprises one or more convex hulls, wherein the one or more convex hulls are formed on the connecting plate (122) and protruding backwards.

4. The phase-change water heater (100) according to any one of claims 1 to 3, wherein a reinforced structure (16) is provided on the housing (10) or the inner container (20) to resist expansion of the phase-change material towards the glass plate (121).

5. The phase-change water heater (100) according to claim 4, wherein the reinforced structure (16) is disposed on an outer wall of the inner container (20) and at least a portion of the reinforced structure (16) is on the same side as the glass plate (121).

6. The phase-change water heater (100) according to any one of claims 1 to 5, wherein at least a side wall of the housing (10) has a port (131), and the phase-change water heater (100) further comprises an end plate (17) that is detachably disposed on each of the at least one side wall to close the port (131).

7. The phase-change water heater (100) according to claim 6, wherein the end plate (17) is connected to each of the at least one side wall of the housing (10) in a plug-in manner.

8. The phase-change water heater (100) according to any one of claims 1 to 7, wherein the water control system (40) comprises:
a water inlet pipe (41), an outlet of the water inlet pipe (41) being respectively connected to the water inlet (471) and the water outlet (472) of the heat exchanger (47), wherein a one-way valve (43) and a thermostatic valve (44) are disposed in parallel between the water inlet pipe (41) and the water outlet (472) of the heat exchanger (47), and a heater (45) is disposed between the water inlet pipe (41) and the water inlet (471) of the heat exchanger (47);
a water outlet pipe (42) connected to the thermostatic valve (44); and
a water pump (46) disposed between the water inlet (471) of the heat exchanger (47) and the water outlet (472) of the heat exchanger (47), wherein in the circulation heating mode, the water inlet (471) and the water outlet (472) of the heat exchanger (47) are communicated with each other through a pipeline where the one-way valve (43) is located.

9. The phase-change water heater (100) according to any one of claims 1 to 8, wherein the housing (10) comprises a partition plate (18), the partition plate (18) divides the chamber (11) into a first installation chamber and a second installation chamber that are independent from each other and are not open to each other, either the water control system (40) or the inner container (20) is disposed in the first installation chamber (11), and the other of the water control system (40) and the inner container (20) is disposed in the second installation chamber (11).

## Patentansprüche

1. Phasenwechsel-Wassererhitzer (100), aufweisend mindestens einen Wasserabgabemodus und einen Zirkulationsheizmodus, wobei der Phasenwechsel-Wassererhitzer (100) Folgendes umfasst:
ein Gehäuse (10), das eine Kammer (11) definiert;
einen Innenbehälter (20), der sich in der Kammer (11) befindet und ein darin eingefülltes Phasenwechselmaterial aufweist;
einen Wärmetauscher (47), der in das Phasenwechselmaterial eingebettet ist; und
ein Wassersteuersystem (40), das mit einem Wassereinlass (471) und einem Wasserauslass (472) des Wärmetauschers (47) verbunden ist, wobei der Zirkulationsheizmodus und der Wasserabgabemodus durch das Wassersteuersystem (40) umschaltbar sind,
wobei im Wasserabgabemodus der Wärmetauscher (47) heißes Wasser nach außen liefert und das Wassersteuersystem (40) Wasser zum Wassereinlass (471) des Wärmetauschers (47) hinzufügt, und wobei im Zirkulationsheizmodus der Wärmetauscher (47) kein heißes Wasser nach außen liefert und Wasser zwischen dem Wassersteuersystem (40) und dem Wärmetauscher (47) im Kreis fließt, nachdem es im Wassersteuersystem (40) erhitzt wurde¹
wobei das Gehäuse (10) ein vorderes Gehäuse (13) und ein hinteres Gehäuse (14) umfasst, die miteinander verbunden sind, wobei die Kammer (11) durch das vordere Gehäuse (13) und das hintere Gehäuse (14) definiert ist,
**dadurch gekennzeichnet, dass** eine Glasplatte (121) und eine Verbindungsplatte (122) vor dem vorderen Gehäuse (13) vorgesehen sind, sich die Glasplatte (121) auf der Verbindungsplatte (122) befindet und eine Spaltstruktur (15) zwischen der Verbindungsplatte (122) und dem vorderen Gehäuse (13) vorgesehen ist.

2. Phasenwechsel-Wassererhitzer (100) gemäß Anspruch 1, wobei eine vordere Oberfläche des Gehäuses (10) mit einer Plattenanordnung (12) versehen ist, wobei die Plattenanordnung (12) die Verbindungsplatte (122) und die Glasplatte (121) umfasst und die Glasplatte (121) auf die Verbindungsplatte (122) geklebt ist.

3. Phasenwechsel-Wassererhitzer (100) gemäß Anspruch 1, wobei die Spaltstruktur (15) eine oder mehrere konvexe Hüllen umfasst, wobei die eine oder mehreren konvexen Hüllen an der Verbindungsplatte (122) ausgebildet sind und nach hinten vorstehen.

4. Phasenwechsel-Wassererhitzer (100) gemäß einem der Ansprüche 1 bis 3, wobei eine verstärkte Struktur (16) am Gehäuse (10) oder am Innenbehälter (20) vorgesehen ist, um einer Ausdehnung des Phasenwechselmaterials in Richtung der Glasplatte (121) zu widerstehen.

5. Phasenwechsel-Wassererhitzer (100) gemäß Anspruch 4, wobei sich die verstärkte Struktur (16) an einer Außenwand des Innenbehälters (20) befindet und mindestens ein Bereich der verstärkten Struktur (16) auf derselben Seite wie die Glasplatte (121) ist.

6. Phasenwechsel-Wassererhitzer (100) gemäß einem der Ansprüche 1 bis 5, wobei mindestens eine Seitenwand des Gehäuses (10) eine Öffnung (131) aufweist und der Phasenwechsel-Wassererhitzer (100) ferner eine Endplatte (17) umfasst, die sich abnehmbar an jeder der mindestens einen Seitenwand befindet, um die Öffnung (131) zu schließen.

7. Phasenwechsel-Wasserheizer (100) gemäß Anspruch 6, wobei die Endplatte (17) mit jeder der mindestens einen Seitenwand des Gehäuses (10) steckbar verbunden ist.

8. Phasenwechsel-Wassererhitzer (100) gemäß einem der Ansprüche 1 bis 7, wobei das Wassersteuersystem (40) Folgendes umfasst:
ein Wassereinlassrohr (41), wobei ein Auslass des Wassereinlassrohrs (41) mit dem Wassereinlass (471) bzw. dem Wasserauslass (472) des Wärmetauschers (47) verbunden ist, wobei ein Einwegventil (43) und ein Thermostatventil (44) parallel zwischen dem Wassereinlassrohr (41) und dem Wasserauslass (472) des Wärmetauschers (47) angeordnet sind, und eine Heizvorrichtung (45) zwischen dem Wassereinlassrohr (41) und dem Wassereinlass (471) des Wärmetauschers (47) angeordnet ist;
ein Wasserauslassrohr (42), das mit dem Thermostatventil (44) verbunden ist; und
eine Wasserpumpe (46), die sich zwischen dem Wassereinlass (471) des Wärmetauschers (47) und dem Wasserauslass (472) des Wärmetauschers (47) befindet, wobei im Zirkulationsheizmodus der Wassereinlass (471) und der Wasserauslass (472) des Wärmetauschers (47) durch eine Rohrleitung, in der sich das Einwegventil (43) befindet, miteinander verbunden sind.

9. Phasenwechsel-Wassererhitzer (100) gemäß einem der Ansprüche 1 bis 8, wobei das Gehäuse (10) eine Trennplatte (18) umfasst, die Trennplatte (18) die Kammer (11) in eine erste Installationskammer und eine zweite Installationskammer unterteilt, die unabhängig voneinander sind und nicht zueinander offen sind, sich entweder das Wassersteuersystem (40) oder der Innenbehälter (20) in der ersten Installationskammer (11) befindet und sich das andere von Wassersteuersystem (40) und Innenbehälter (20) in der zweiten Installationskammer (11) befindet.

## Revendications

1. Un chauffe-eau à changement de phase (100), ayant au moins un mode d'évacuation de l'eau et un mode de chauffage par circulation, le chauffe-eau à changement de phase (100) comprenant :
un boîtier (10) définissant une chambre (11) ;
un récipient intérieur (20) disposé dans la chambre (11) et contenant un matériau à changement de phase ;
un échangeur de chaleur (47) enfoui dans le matériau à changement de phase ; et
un système de contrôle de l'eau (40) connecté à une entrée d'eau (471) et à une sortie d'eau (472) de l'échangeur de chaleur (47), dans lequel le mode de chauffage par circulation et le mode d'évacuation de l'eau peuvent être commutés par le système de contrôle de l'eau (40),
dans lequel, en mode d'évacuation de l'eau, l'échangeur de chaleur (47) fournit de l'eau chaude à l'extérieur, et le système de contrôle de l'eau (40) ajoute de l'eau à l'entrée d'eau (471) de l'échangeur de chaleur (47), et dans lequel, en mode de chauffage par circulation, l'échangeur de chaleur (47) ne fournit pas d'eau chaude à l'extérieur, et de l'eau circule circulairement entre le système de contrôle de l'eau (40) et l'échangeur de chaleur (47) après avoir été chauffée dans le système de contrôle de l'eau (40).¹
dans lequel le boîtier (10) comprend un boîtier avant (13) et un boîtier arrière (14) qui sont reliés l'un à l'autre, la chambre (11) étant définie par le boîtier avant (13) et le boîtier arrière (14),
**caractérisé par le fait qu'**une plaque de verre (121) et une plaque de connexion (122) sont prévues devant le boîtier avant (13), la plaque de verre (121) est disposée sur la plaque de connexion (122), et une structure d'espace (15) est prévue entre la plaque de connexion (122) et le boîtier avant (13).

2. Le chauffe-eau à changement de phase (100) selon la revendication 1, dans lequel une surface avant du boîtier (10) est pourvue d'un ensemble de panneaux (12), dans lequel l'ensemble de panneaux (12) comprend la plaque de connexion (122) et la plaque de verre (121), et la plaque de verre (121) est collée sur la plaque de connexion (122).

3. Le chauffe-eau à changement de phase (100) selon la revendication 1, dans lequel la structure de l'espace (15) comprend une ou plusieurs coques convexes, dans laquelle la ou les coques convexes sont formées sur la plaque de connexion (122) et font saillie vers l'arrière.

4. Le chauffe-eau à changement de phase (100) selon l'une des revendications 1 à 3, dans lequel une structure renforcée (16) est prévue sur le boîtier (10) ou le récipient intérieur (20) pour résister à l'expansion du matériau à changement de phase vers la plaque de verre (121).

5. Le chauffe-eau à changement de phase (100) selon la revendication 4, dans lequel la structure renforcée (16) est disposée sur une paroi extérieure du récipient intérieur (20) et au moins une partie de la structure renforcée (16) est du même côté que la plaque de verre (121).

6. Le chauffe-eau à changement de phase (100) selon l'une des revendications 1 à 5, dans lequel au moins une paroi latérale du boîtier (10) comporte un orifice (131), et le chauffe-eau à changement de phase (100) comprend en outre une plaque d'extrémité (17) qui est disposée de manière amovible sur chacune des au moins une paroi latérale pour fermer l'orifice (131).

7. Chauffe-eau à changement de phase (100) selon la revendication 6, dans lequel la plaque d'extrémité (17) est connectée à chacune des au moins une paroi latérale du boîtier (10) de manière enfichable.

8. Le chauffe-eau à changement de phase (100) selon l'une des revendications 1 à 7, dans lequel le système de contrôle de l'eau (40) comprend :
un tuyau d'arrivée d'eau (41), une sortie du tuyau d'arrivée d'eau (41) étant respectivement reliée à l'entrée d'eau (471) et à la sortie d'eau (472) de l'échangeur de chaleur (47), une vanne unidirectionnelle (43) et une vanne thermostatique (44) étant disposées en parallèle entre le tuyau d'arrivée d'eau (41) et la sortie d'eau (472) de l'échangeur de chaleur (47), et un dispositif de chauffage (45) étant disposé entre le tuyau d'arrivée d'eau (41) et l'entrée d'eau (471) de l'échangeur de chaleur (47) ;
un tuyau de sortie d'eau (42) relié à la vanne thermostatique (44) ; et
une pompe à eau (46) disposée entre l'entrée d'eau (471) de l'échangeur de chaleur (47) et la sortie d'eau (472) de l'échangeur de chaleur (47), dans laquelle, en mode de chauffage par circulation, l'entrée d'eau (471) et la sortie d'eau (472) de l'échangeur de chaleur (47) sont communiquées l'une avec l'autre par l'intermédiaire d'une canalisation où se trouve la vanne unidirectionnelle (43).

9. Le chauffe-eau à changement de phase (100) selon l'une des revendications 1 à 8, dans lequel le boîtier (10) comprend une plaque de séparation (18), la plaque de séparation (18) divise la chambre (11) en une première chambre d'installation et une seconde chambre d'installation qui sont indépendantes l'une de l'autre et ne sont pas ouvertes l'une à l'autre, le système de contrôle de l'eau (40) ou le récipient intérieur (20) est disposé dans la première chambre d'installation (11), et l'autre du système de contrôle de l'eau (40) et du récipient intérieur (20) est disposé dans la seconde chambre d'installation (11).
